# EUROPEAN PATENT APPLICATION

(11) **EP 4 344 071 A1**
(43) Date of publication of application: **27.03.2024**
(21) Application number: 23199600.0
(22) Date of filing: 26.09.2023
(51) Int. Cl.: H04B 1/3827, G06F 1/16, H04M 1/72412, H04W 4/80

(54) **PLUGGABLE WIRELESS MODULE, SYSTEM COMPRISING THE MODULE AND METHOD FOR MANUFACTURING THE MODULE**

(30) Priority: 26.09.2022 CN 202211172200
(71) Applicant: Techtronic Cordless GP, Anderson, SC 29621 (US)
(72) Inventor: LIU, Ya Bin, Dongguan City (CN); WANG, Ren Jie, Dongguan City (CN); ZHAO, Jiang, Dongguan City (CN); GUO, Xi, Dongguan City (CN)
(74) Representative: Novagraaf Group

(57) **Abstract**

The present invention discloses a pluggable wireless module, a system comprising the module and a method for manufacturing the module. The pluggable wireless module comprises: a housing configured to be connected to a smart platform product in a pluggable manner; an interface located on the housing and configured to be connected to the smart platform product to transmit data when the housing is connected to the smart platform product; a circuit board received in the housing; a communication module located on the circuit board; and a storage module located on the circuit board for receiving and storing data from the smart platform product, wherein when the pluggable wireless module is connected to the smart platform product, the communication module is capable of wirelessly communicating with an external smart device, such that a user can use the smart device to control the pluggable wireless module to transmit data between the pluggable wireless module and the smart platform product or to set the smart platform product.

## Description

### Technical Field

The present invention generally relates to a pluggable wireless module, which may be used in a smart platform product such as a battery pack or a sensor module. The present invention also relates to a system comprising the pluggable wireless module and a method for manufacturing the pluggable wireless module.

### Background Art

The Internet of Things (IoT) and devices based on IoT technology have been widely used in industrial fields and daily life. For the purpose of preventing theft, it is well known in the prior art to install wireless modules (such as IoT modules) with positioning and wireless communication functions in some electronic devices. In some applications, the wireless modules may perform remote management, data exchange, real-time monitoring, etc. on the electronic devices.

In the prior art, a wireless module usually forms an integral part of the corresponding electronic device and is fixedly located inside a device housing and integrated into the entire circuit board of the electronic device. The disadvantage of such an integrated wireless module is that data or settings cannot be easily exchanged between different electronic devices, so that a user must operate each device separately, making the relevant operations time-consuming and laborious.

Therefore, there is an urgent need in the art for a technology that allows for rapid data exchange between different devices, and allows for rapid setting or rapid upgrading of the devices.

### Summary of the Invention

The present invention solves the above problems by providing a pluggable wireless module and a smart platform product having the module.

In one aspect, the present invention provides a pluggable wireless module for a smart platform product, the pluggable wireless module comprising: a housing configured to be connected to the smart platform product in a pluggable manner; an interface located on the housing and configured to be connected to the smart platform product to transmit data when the housing is connected to the smart platform product; a circuit board received in the housing; a communication module located on the circuit board; and a storage module located on the circuit board for receiving and storing data from the smart platform product, wherein when the pluggable wireless module is connected to the smart platform product, the communication module is capable of wirelessly communicating with an external smart device, such that a user can use the smart device to control the pluggable wireless module to transmit data between the pluggable wireless module and the smart platform product or to set the smart platform product.

Preferably, the communication module comprises a Bluetooth module and/or an NB-IoT module.

Preferably, the pluggable wireless module further comprises a control module located on the circuit board, and the control module is configured to perform the following routines when the pluggable wireless module is powered on: obtaining a state of the pluggable wireless module; determining whether the pluggable wireless module is inserted into the smart platform product; identifying a type of the communication module in response to determining that the pluggable wireless module is inserted into the smart platform product; and performing Bluetooth logic control or NB-IoT logic control correspondingly in response to identifying that the communication module is a Bluetooth wireless module or an NB-IoT module.

Preferably, the housing comprises a guide, and the guide is configured to guide the housing into a slot of the smart platform product. Advantageously, the guide is a slide groove or a slide rail. Correspondingly, the smart platform product has a corresponding slide rail or slide groove which cooperates with the slide groove or the slide rail. Advantageously, the slide rail or the slide groove in the smart platform product may be formed by a circuit board of the smart platform product.

Preferably, the pluggable wireless module further comprises a cover, such that when the housing is located in the slot of the smart platform product, an outer surface of the cover is flush with an outer surface of the housing of the smart platform product.

Preferably, the pluggable wireless module further comprises a bevel for positioning when being inserted into the smart platform product.

Preferably, the pluggable wireless module further comprises a pull ring, and the pull ring is configured to be operated by the user to plug and unplug the pluggable wireless module. Advantageously, the pull ring is configured to be pivotable between a retracted position and an extended position. Alternatively, the pull ring may be fixedly located in a recess of the housing. In another embodiment, instead of the pull ring, the pluggable wireless module has textures or protrusions on the housing to facilitate user grasping.

Advantageously, the pluggable wireless module further comprises an indicator light for indicating a connection state of the pluggable wireless module.

Preferably, the pluggable wireless module is in the form of a thin card.

Preferably, when the housing is connected to the smart platform product, the interface is engaged with a corresponding interface on the circuit board of the smart platform product.

Preferably, the pluggable wireless module is powered by the smart platform product when connected to the smart platform product.

Preferably, the smart device is a smart phone, a smart watch, a desktop computer, a laptop computer or a tablet computer.

Preferably, the interface is a serial interface. In particular, the interface transmits data using a universal asynchronous receiver/transmitter (UART) communication protocol.

Preferably, the pluggable wireless module further comprises one or more of a vibration sensor, a Hall sensor, a temperature sensor, a G-type sensor, and an acceleration sensor.

In another aspect, the present invention provides a system comprising a smart platform product, the system comprising a pluggable wireless module described above.

Preferably, the smart platform product is a battery pack, an adapter, an electric power tool or a sensor module.

Preferably, the smart platform product comprises a slot for receiving the pluggable wireless module. Advantageously, the slot is at least partially formed by the circuit board of the smart platform product.

Preferably, the smart platform product comprises a controller configured to: identify the identity of the pluggable wireless module (10); identify a type of a communication module of the pluggable wireless module (10); and performing a Bluetooth logic control or an NB-IoT logic control correspondingly in response to identifying that the communication module is a Bluetooth module or an NB-IoT module.

Preferably, the pluggable wireless module comprises a controller configured to: determine whether the pluggable wireless module is inserted into the smart platform product; identify a type of the smart platform product in response to determining that the pluggable wireless module is inserted into the smart platform product; and operate in different operating modes correspondingly in response to the identified type of the smart platform product. Advantageously, a step of operating in different operating modes comprises: operating in a first operating mode in response to identifying that the smart platform product is a battery pack or an adapter; and operating in a second operating mode different from the first operating mode in response to identifying that the smart platform product is a sensor module. Advantageously, the sensor module is a tracker. Preferably, in the first operating mode, the pluggable wireless module works as a gateway, and in the second operating mode, the pluggable wireless module works as a smart tag for a non-electric power tool.

Preferably, the pluggable wireless module comprises a Bluetooth module for a Bluetooth radio. In the first operating mode, the Bluetooth radio is configured to share information on the smart platform product into which the pluggable wireless module is inserted and/or information on an electric power tool connected to the smart platform product, and in the second operating mode, the Bluetooth radio is configured to share information on the pluggable wireless module and/or data of sensors of the pluggable wireless module. Advantageously, in the first operating mode, the Bluetooth radio is connectable to the external smart device to establish Bluetooth communication, and in the second operating mode, the Bluetooth radio is not connectable to the external smart device.

Preferably, in the first operating mode, the sensors of the pluggable wireless module are configured to obtain information on battery usage and ambient conditions, and in the second operating mode, the sensors of the pluggable wireless module are configured to obtain information on the non-electric power tool. Advantageously, the sensors comprise a vibration sensor and a temperature sensor.

Preferably, the controller is further configured to: reset the pluggable wireless module when the pluggable wireless module is unplugged from the smart platform product. Advantageously, a step of resetting the pluggable wireless module comprises: deleting local data for broadcasting.

Preferably, the controller is further configured to: change a setting of the pluggable wireless module, wherein the changed setting is capable of being maintained after powering off the pluggable wireless module. Advantageously, a step of changing a setting of the pluggable wireless module comprises: selectively activating one or more of a plurality of sensors of the pluggable wireless module.

Preferably, a communication connection is established between the smart device and the pluggable wireless module through an application program on the external smart device, wherein the smart device is capable of accessing one or more of the following pieces of information through the pluggable wireless module: a serial number of the smart platform product; a type of the smart platform product; a running time of the smart platform product; a running time of the pluggable wireless module; available parameters for configuration and current settings; an ambient temperature; an activation and deactivation state of the sensors of the pluggable wireless module; the remaining power of a battery of the smart platform product; and the temperature of the battery of the smart platform product. Advantageously, the smart device is capable of setting and/or correcting parameters of the pluggable wireless module and/or the smart platform product by means of the pluggable wireless module. Advantageously, when there is a communication connection between the smart device and the pluggable wireless module, the pluggable wireless module remains in an activated state. Advantageously, when the smart platform product is a battery pack and the battery pack is connected to a charger or is being charged, the pluggable wireless module is capable of sending or broadcasting one or more of the following information: a notification that the battery pack is connected to the charger; a notification that the battery pack needs to be cooled before charging; a charged level of the battery pack; a charging type; and a notification that the battery pack is fully charged. For example, the user may receive a message that the battery cannot be charged when the temperature of the battery is too high to charge same.

In a further aspect, the present invention provides a method for manufacturing the pluggable wireless module, the method comprising: assembling a circuit board of the pluggable wireless module; supporting the circuit board in a mold; injecting a soft plastic material into the mold; and solidifying the soft plastic material to form a housing of the pluggable wireless module. Preferably, the step of injecting the soft plastic material into the mold is carried out at a low pressure and low temperature. Preferably, the soft plastic material is polyamide. Preferably, a pull ring of the pluggable wireless module is fixed on the circuit board and partially extends outside the housing. Preferably, an interface of the pluggable wireless module is fixed on the circuit board and partially extends outside the housing.

The pluggable wireless module of the present invention can be applied in a smart platform product with a smart use function, for example, in a battery pack, in an adapter or in a sensor module. When inserted into a smart platform product, the pluggable wireless module can obtain data and settings from the smart platform product and store the data and settings in the pluggable wireless module. When the pluggable wireless module is removed from the smart platform product and inserted into another smart platform product, the stored data and settings can be quickly transferred to the latter smart platform product. This enables fast exchange of data and settings between different smart platform products.

### Brief Description of the Drawings

The present invention is specifically illustrated by means of examples with reference to the accompanying drawings, in which:
FIG. 1 shows a schematic perspective view of a first embodiment of a pluggable wireless module according to the present invention;
FIG. 2 shows an exploded perspective view of the pluggable wireless module in FIG. 1;
FIG. 3 shows a schematic perspective view of a smart platform product according to the present invention, into which the pluggable wireless module in FIG. 1 is inserted;
FIG. 4 shows a schematic perspective view of the pluggable wireless module in FIG. 1 and a circuit board of the smart platform product;
FIG. 5 shows a schematic perspective view showing a second embodiment of a pluggable wireless module according to the present invention;
FIG. 6 shows a schematic perspective view of a smart platform product according to the present invention, into which the pluggable wireless module in FIG. 5 is inserted;
FIG. 7 shows a schematic perspective view of the pluggable wireless module in FIG. 5 and a circuit board of the smart platform product;
FIG. 8 shows a schematic block diagram of communication between a pluggable wireless module, a smart platform product, and a smart device according to the present invention; and
FIG. 9 shows a flow chart of a logic control of a pluggable wireless module according to the present invention.

### List of reference signs:

- 10: Pluggable wireless module
- 11: Housing
- 12: Interface
- 13: Circuit board
- 14: Guide
- 15: Pull ring
- 16: Cover
- 17: Recess
- 18: Bevel
- 20: Smart platform product
- 21: Housing of smart platform product
- 22: Circuit board of smart platform product
- 23: Slot
- 24: Depression
- 30: Smart device
- 100: Start
- 200: Obtain a state of a pluggable wireless module
- 300: Is the pluggable wireless module inserted?
- 400: Identify a type of the pluggable wireless module
- 500: Is it an NB-IoT module?
- 510: Perform an NB-IoT logic control
- 520: Stop working?
- 600: Is it a Bluetooth module?
- 610: Perform a Bluetooth logic control
- 620: Stop working?
- 700: End.

### Detailed Description of Embodiments

In order to facilitate understanding of the present invention, the present invention is described more fully below with reference to the related drawings. Preferred embodiments of the present invention are shown in the accompanying drawings. However, the present invention may be implemented in many different forms and is not limited to the embodiments described herein. On the contrary, these embodiments are provided for a more complete and thorough understanding of the disclosure of the present invention.

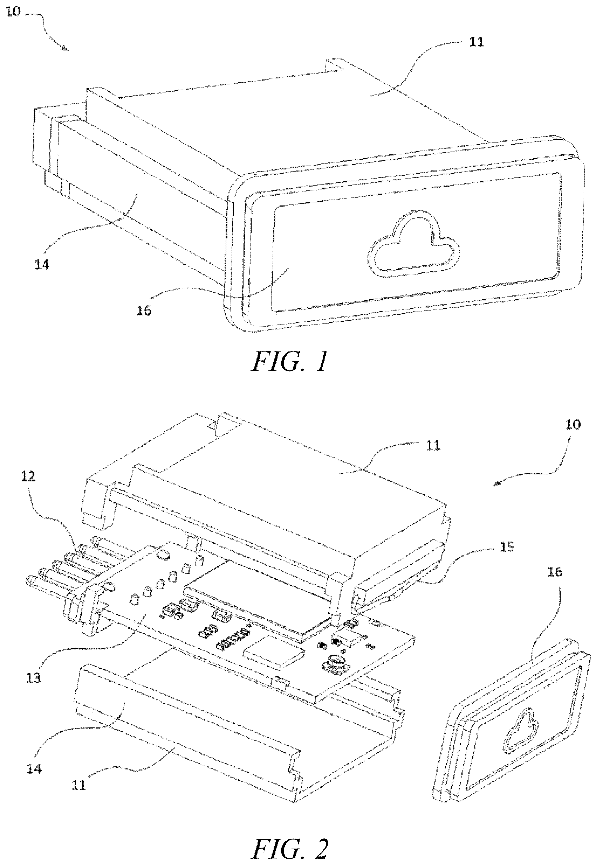

FIG. 1 shows a schematic perspective view of a first embodiment of a pluggable wireless module 10 according to the present invention, and FIG. 2 shows an exploded perspective view of the pluggable wireless module 10. Referring to FIGS. 1 and 2, the pluggable wireless module 10 is in the form of a thin card or an electronic card as a whole, and has a housing 11, an interface 12 located on a rear side of the housing 11, and a circuit board 13 accommodated in the housing 11. The interface 12 protrudes from the rear side of the housing 11, and may be in the form of a pin or a socket. The interface 12 is electrically connected to the circuit board 13, for example, directly soldered to the circuit board 13. The circuit board 13 may be provided with a communication module, a storage module and a control module. The communication module is configured to wirelessly communicate with an external smart device 30, the storage module is configured to receive and store data from the smart platform product 20, and the control module is configured to control the pluggable wireless module 10 to perform a corresponding routine or logic control. According to requirements, the pluggable wireless module 10 may comprise various sensors, such as a vibration sensor, a Hall sensor, a temperature sensor, a G-type sensor (i.e., acceleration sensor), etc. The pluggable wireless module 10 may further comprise an antenna for performing wireless communication. The Hall sensor may perform detection when a non-electric power tool is running and record its running time to provide maintenance recommendations. The pluggable wireless module may have a three-axis acceleration sensor to perform detection when a tool (especially a pneumatic tool) is running and record its running time to provide maintenance recommendations. In particular, the three-axis acceleration sensor detects and counts the drop of the tool. The temperature sensor may have an accuracy within ±3°C and has an ultra-low sleep power to measure the ambient temperature.

The housing 11 is connected to the smart platform product 20 in a pluggable manner, so as to establish an electrical connection between the interface 12 and a corresponding interface of the smart platform product 20. The housing 11 may be composed of an upper housing and a lower housing. A guide 14 is provided on two sides of the housing 11 for guiding the housing 11 into the smart platform product 20. The guide 14 is an outwardly protruding slide rail. A pull ring 15 is provided on a front side of the housing 11. The pull ring is usually in a vertical retracted position and can be pivoted to a horizontal extended position such that the user can pull the pluggable wireless module 10 via the pull ring. A cover 16 may be provided in front of the housing 11 to hide the housing 11 and the pull ring 15. The pluggable wireless module 10 may comprise an externally visible indicator light (not shown) to indicate a connection state of the pluggable wireless module 10. For example, the indicator light may be turned on to indicate that the pluggable wireless module 10 has been powered on or an electrical connection has been established with the pluggable wireless module 10, and/or the indicator light may flash to indicate that data is being transmitted. In addition, the pluggable wireless module 10 may further comprise a buzzer to issue corresponding prompt sounds or alarms.

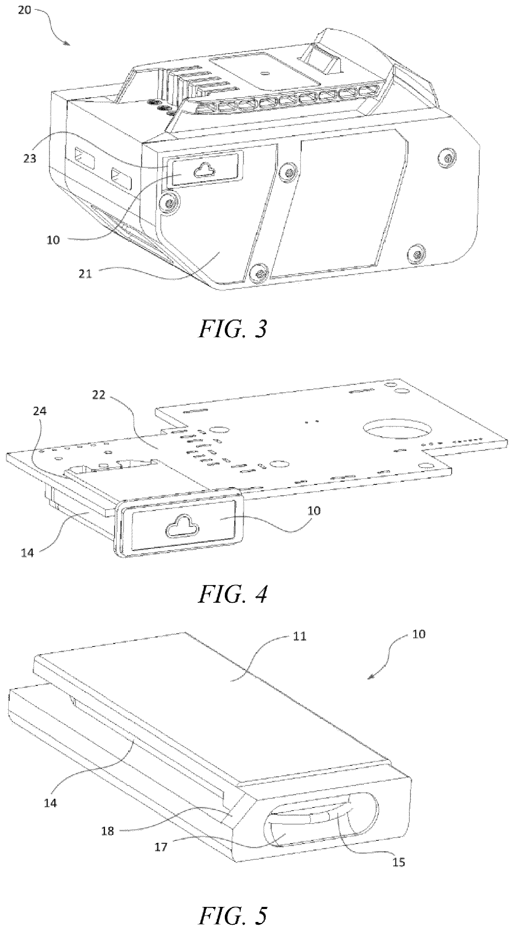

FIG. 3 shows a schematic perspective view of a smart platform product with the pluggable wireless module in FIG. 1, and FIG. 4 shows a schematic perspective view of the pluggable wireless module in FIG. 1 and a circuit board of the smart platform product. Referring to FIGS. 3 and 4, the smart platform product 20 is represented by a battery pack as an example, which may alternatively be an electric power tool (i.e., an electric power tool body excluding the battery pack), an adapter, a sensor module or other electrical devices.

The smart platform product 20 is provided with a housing 21, and a slot 23 for receiving the pluggable wireless module 10. The slot 23 in the figures is in the form of a square hole having an opening in a side surface of the housing 21, such that when the pluggable wireless module 10 is inserted into the slot 23, an outer end (i.e., the cover 16) of the pluggable wireless module 10 is substantially flush with the side surface of the housing 21. It is conceivable that the slot 23 may be in the form of a groove. For example, the groove may be located at the intersection of a top side and a side surface of the housing 21, such that when the pluggable wireless module 10 is inserted into the slot 23, the top side and the outer end of the pluggable wireless module 10 are substantially flush with a top surface and the side surface of the housing 21 respectively. A bottom end of the slot 23 has an interface corresponding to the interface 12 of the pluggable wireless module 10. Engagement or cooperation between the interfaces can establish an electrical connection between the pluggable wireless module 10 and the smart platform product 20 to transmit data, and additionally, a mechanical connection may be established between the two to retain the pluggable wireless module 10 in the slot 23. After the connection is established between the interfaces, the pluggable wireless module 10 may be powered by the smart platform product 20. Two sides of the slot 23 (preferably three sides, that is, the left and right sides and the bottom side) are provided with slide grooves to cooperate with the guide 14 (which is in the form of a slide rail) of the pluggable wireless module 10, such that the pluggable wireless module 10 can slide into or out of the slot 23. A clamping member (such as a leaf spring) may be provided on a side wall (e.g., on a slide groove) of the slot 23, so as to keep the pluggable wireless module 10 in place when it is inserted.

As shown in FIG. 4, the circuit board 22 of the smart platform product 20 has a depression 24 at a position corresponding to the pluggable wireless module 10, to surround the inserted pluggable wireless module 10 on three sides. An edge of the depression 24 at least partially forms the slide groove of the slot 23 to cooperate with the guide 14 of the pluggable wireless module 10. In this way, after the pluggable wireless module 10 is inserted into the slot 23 and a communication connection is established between the interface 12 and the corresponding interface on the telegraph path 22, the circuit board 13 of the pluggable wireless module 10 essentially forms a part of the circuit board 22 of the smart platform product 20 and works cooperatively therewith.

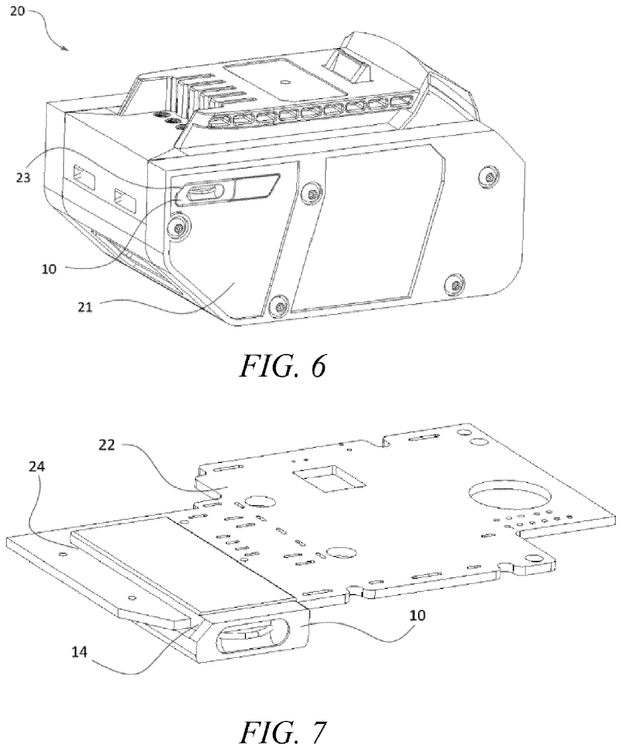

FIG. 5 shows a schematic perspective view showing a second embodiment of a pluggable wireless module according to the present invention, FIG. 6 shows a schematic perspective view of a smart platform product with the pluggable wireless module in FIG. 5, and FIG. 7 shows a schematic perspective view of the pluggable wireless module in FIG. 5 and a circuit board of the smart platform product. In the pluggable wireless module 10 shown in FIG. 5, the guide 14 on two sides (preferably three sides, that is, the left and right sides and the bottom side) of the housing 11 is an inwardly recessed slide groove. The pull ring 15 is a non-pivotable fixed pull ring, which is located in a recess 17 on the front side of the housing 11 and is accessible by the user's fingers or a simple tool. In addition, the pluggable wireless module 10 may have no cover, so that when it is inserted into the smart platform product 20, the front side of the housing 11 including the pull ring 15 is substantially flush with an outer surface of a housing of the smart platform product 20, as shown in FIG. 6. The pluggable wireless module is generally a rectangular cuboid. Preferably, the pluggable wireless module may have a bevel 18, that is, one side edge forming the rectangular cuboid of the pluggable wireless module is chamfered. When the pluggable wireless module is inserted into the slot 23 of the smart platform product 20, the bevel 18 matches a corresponding shape in the slot 23 to form a positioning feature, so as to prevent the user from performing the insertion action in a wrong orientation. Corresponding to the guide 14 in the form of a slide groove, a slide rail matched therewith is formed in the slot 23 of the smart platform product 20. As shown in FIG. 7, the circuit board 22 of the smart platform product 20 has a depression 24 at a position corresponding to the pluggable wireless module 10. An edge of the depression 24 at least partially forms the slide rail of the slot 23 so as to cooperate with the guide 14 in the form of a slide groove. As described above, this configuration allows the circuit board 13 of the pluggable wireless module 10 to form a part of the circuit board 22 of the smart platform product 20 and work cooperatively therewith.

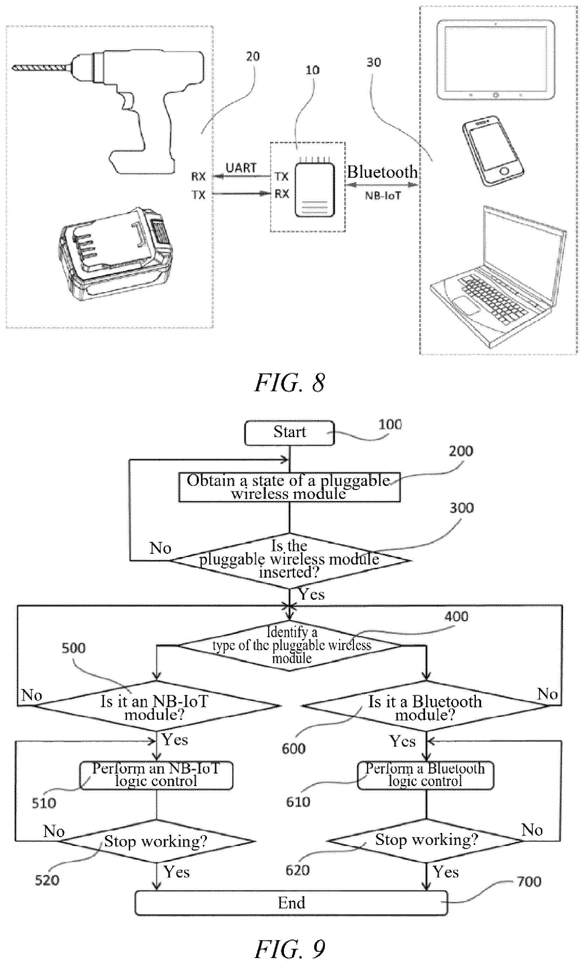

FIG. 8 shows a schematic diagram of communication between a pluggable wireless module, a smart platform product, and a smart device according to the present invention. When the pluggable wireless module 10 is inserted into the slot 23 of the smart platform product 20, a communication connection is established between the interface 12 of the pluggable wireless module 10 and the corresponding interface of the circuit board 22 of the smart platform product 20, and the pluggable wireless module 10 is powered on. Moreover, a wireless communication connection can be established between the external smart device 30 and the pluggable wireless module 10, so that the user can remotely operate the pluggable wireless module 10 by means of the smart device 30 to perform data exchange between the pluggable wireless module 10 and the smart platform product 20, or to set the smart platform product 20. The smart platform product 20 may be a battery pack, an adapter (e.g., a battery pack, an adapter for an electric power tool), an electric power tool (especially, an electric power tool body connected to a battery pack), or a sensor module. The pluggable wireless module is also compatible with other tools (or future tools) and provides communication features for other tools, e.g., parameterizing torque, sending information about consumables or work materials from an application program or an adapter to the tool to implement a smart tool function. The smart device 30 may be a smart phone, a smart watch, a desktop computer, a laptop computer or a tablet computer.

By means of connection with the pluggable wireless module 10, different smart platform products can exchange data, have their settings updated, or have their programs upgraded. For example, the pluggable wireless module 10 may directly obtain working data of the smart platform product 20 or detect the working data by means of sensors on the pluggable wireless module. For a battery pack, the working data is, for example, a battery voltage, a battery temperature, a battery identification, a battery state, a battery power level, remaining battery life, the number of accumulated battery charge and discharge times, historical information of the battery pack, and software and hardware versions of the battery pack. For an electric power tool, the working data is, for example, a motor speed, a motor current, a motor temperature, a control board temperature, a state of the electric power tool, an identification of the electric power tool, historical information of the electric power tool, etc. The pluggable wireless module (particularly when used as a track device for use in a sensor module) may send the type of the activated sensor and the calculated running time. The working data may be stored in the storage module of the pluggable wireless module 10, and when the pluggable wireless module 10 is connected to another smart platform product 20, the stored working data may be transmitted to the other smart platform product 20 or used to set the other smart platform product 20.

The interface 12 of the pluggable wireless module 10 is a serial interface. In particular, the interface 12 transmits data using a universal asynchronous receiver/transmitter (UART) communication protocol. In UART communication, two UARTs communicate with each other directly. The UART at the transmitting end converts parallel data from a control device (such as a CPU) into serial data, and transmits same serially to the UART at the receiving end, and then the UART at the receiving end converts the serial data into parallel data for normal processing by a receiving device. Here, only two lines RX/TX are needed to transmit data between the two UARTs. The pluggable wireless module can be woken up by any UART bus client (tool or battery management system) or GPIO, but cannot wake up the latter. That is, the internal communication between the pluggable wireless module and the client can only be performed when the client is started.

The communication module of the pluggable wireless module 10 may comprise a Bluetooth module and/or a Narrowband Internet of Things (NB-IoT) module, so as to carry out Bluetooth communication or NB-IoT communication between the pluggable wireless module 10 and the external smart device 30. An application program (APP) or an IoT platform on the smart device 30 may be operated by the user to activate and control the corresponding pluggable wireless module 10. The smart device 30 may be further connected to a cloud server, such that key data can be uploaded to the cloud server for routine maintenance. The pluggable wireless module is provided with no button for pairing (for example, Bluetooth pairing), and the pairing may be triggered or confirmed by a button connected to the pluggable wireless module. The button may be a button located on a power tool or on a remote controller. The pluggable wireless module is configured to provide buffering between the tool (or battery management system) and the "outside world" (i.e., an application program, a gateway, etc. on an external smart device), and to provide communication between the two. FIG. 9 shows a flow chart of a logic control of a pluggable wireless module according to the present invention. The control module may start to perform the aforementioned logic control or program (or routine) at step 100 when the pluggable wireless module 10 is powered on. At step 200, a state of the pluggable wireless module 10 is detected. The state may comprise initial operating parameters of the pluggable wireless module 10 and ambient parameters, which may be obtained by sensors on the pluggable wireless module 10. The program then proceeds to step 300 to determine whether the pluggable wireless module 10 is inserted into the smart platform product 20. If it is determined at step 300 that the pluggable wireless module 10 has been inserted into the smart platform product 20, the program proceeds to step 400, otherwise the program returns to step 200. At step 400, a type of a communication module of the pluggable wireless module 10 is identified, and at steps 500 and 600, it is determined whether the communication module includes an NB-IoT module and whether the communication module includes a Bluetooth module, respectively. Steps 400, 500, and 600 may also be combined into two steps and performed sequentially. For example, first whether the communication module includes an NB-IoT module is determined, and then whether the communication module includes a Bluetooth module is determined. If the communication module includes both an NB-IoT module and a Bluetooth module, the program may further include a step of determining which module is used for communication.

At step 500, if it is determined that the communication module includes an NB-IoT module, the program proceeds to step 510 to perform an NB-IoT logic control. Then, the external smart device 30 can be connected to the pluggable wireless module 10 through an NB-IoT communication protocol for remote control. At step 500, if it is determined that the communication module includes no NB-IoT module, the program returns to step 400 for re-identification. After step 510, the program proceeds to step 520 to inquire whether to stop working. If yes, the program proceeds to step 700 to end the work; otherwise, the program returns to step 510 to perform the NB-IoT logic control in a loop.

Similarly, at step 600, if it is determined that the communication module includes a Bluetooth module, the program proceeds to step 610 to perform a Bluetooth logic control. Then, the external smart device 30 can be connected to the pluggable wireless module 10 through a Bluetooth communication protocol for remote control. At step 600, if it is determined that the communication module includes no Bluetooth module, the program returns to step 400 for re-identification. After step 610, the program proceeds to step 620 to inquire whether to stop working. If yes, the program proceeds to step 700 to end the work; otherwise, the program returns to step 610 to perform the Bluetooth logic control in a loop.

Additionally or alternatively, the control module may perform the following logic control or program or routine: determining whether the pluggable wireless module 10 is inserted into the smart platform product 20; identifying a type of the smart platform product 20 in response to determining that the pluggable wireless module 10 is inserted into the smart platform product 20; and operating in different operating modes correspondingly in response to the identified type of the smart platform product 20. In particular, a first operating mode is entered in response to identifying that the smart platform product 20 is a battery pack or an adapter, and a second operating mode different from the first operating mode is entered in response to identifying that the smart platform product 20 is a sensor module.

In the first operating mode, the pluggable wireless module 10 works as a gateway. In this case, a Bluetooth radio with the Bluetooth module is connectable and is configured to share information on the smart platform product 20 into which the pluggable wireless module 10 is inserted and/or information on an electric power tool connected to the smart platform product 20. The sensors (such as a vibration sensor and a temperature sensor) of the pluggable wireless module 10 are configured to obtain information on battery usage and ambient conditions.

In the second operating mode, the pluggable wireless module 10 works as a smart tag for a non-electric power tool. In this case, the Bluetooth radio is unconnectable, and is configured to share information on the pluggable wireless module 10 and/or data of the sensors of the pluggable wireless module 10. The sensors of the pluggable wireless module 10 are configured to obtain information on the non-electric power tool.

Further, when the pluggable wireless module 10 is unplugged from the smart platform product 20, the pluggable wireless module 10 may be reset, for example, local data for broadcasting is deleted. The setting of the pluggable wireless module 10 is changeable (e.g., reselecting which sensors are activated and which sensors are deactivated), and the changed setting can be maintained after the pluggable wireless module 10 is powered off (e.g., when replacing the battery).

Further, through the application program on the external smart device 30, a communication connection maybe established between the smart device 30 and the pluggable wireless module 10. The smart device 30 can access the following information through the pluggable wireless module 10: a serial number, a type and a running time of the smart platform product 20, the remaining power of a battery, the temperature of the battery; a running time of the pluggable wireless module 10, available parameters for configuration and current settings, and an activation and deactivation state of the sensors; an ambient temperature, etc. When there is a communication connection between the smart device 30 and the pluggable wireless module 10, the pluggable wireless module 10 remains in an activated state. When the smart platform product is a battery pack and the battery pack is connected to a charger or is being charged, the pluggable wireless module may send or broadcast one or more of the following information: a notification that the battery pack is connected to the charger; a notification that the battery pack needs to be cooled before charging; a charged level of the battery pack; a charging type; a notification that the battery pack is fully charged, etc. When the smart device 30 is connected to the system of the present invention, the smart device 30 may configure, correct and optimize the pluggable wireless module 10 and the smart platform product 20 by means of the pluggable wireless module 10, for example, adjusting working parameters, such as a motor speed, a motor current, a motor temperature threshold, a battery threshold, etc., for example, correcting the sensors of the wireless module 10.

It is conceivable that the pluggable wireless module 10 and the smart platform product 20 may each comprise a controller or control module (not shown). The controller of the pluggable wireless module 10 can interact with the controller of the smart platform product 20 to control the pluggable wireless module 10 and/or the smart platform product 20. The aforementioned logic control or program or routine may be partially or completely performed by the controller of the pluggable wireless module 10 and/or the controller of the smart platform product 20.

The pluggable wireless module according to the present invention may be manufactured by a soft plastic injection molding process. When using the soft plastic injection molding process to manufacture the pluggable wireless module 10 of the present invention, the assembled circuit board 13 (i.e., the circuit board 13 on which various electronic devices have been installed) must first be supported on a pre-designed mold. The mold defines a cavity corresponding to the contour of the housing 11 of the pluggable wireless module 10 and has an internal contour corresponding to the external features (e.g., the interface 12, the guide 14, the recess 17 and the bevel 18) of the housing 11. Next, a soft plastic material is injected into the cavity defined by the mold and fills a space between the circuit board 13 (and the electronic devices thereon) and the mold. Finally, the soft plastic material is solidified to form the housing 11.

The soft plastic material refers to plastics whose surface hardness is relatively low after solidification. The soft plastic material is, for example, polyamide (PU), which is a thermoplastic low-pressure injection molding material, which has good fluidity and excellent bonding performance, and is non-corrosive, non-toxic and odorless, no harmful substances are produced when in use, and its flame retardancy meets relevant standards. Due to these properties, the injection step may be performed at a low pressure and at a low temperature, that is, the injection step can be performed at an injection pressure that does not crush electronic elements mounted on the circuit board 13 and at an injection molding temperature that is lower than the melting temperature of a solder on the circuit board 13. By using the soft plastic injection molding process, the pluggable wireless module 10 can be manufactured in a simple and convenient manner, and it is possible to provide the pluggable wireless module with insulation, waterproofing, dustproofing, impact resistance, shock absorption, chemical corrosion resistance and other functions.

When using the soft plastic injection molding process to manufacture the pluggable wireless module 10 of the present invention, the pull ring 15 may be first fixed to the circuit board 13, and after the soft plastic material is injected and solidified, the pull ring 15 is partially exposed outside the formed housing 11 so as to be accessible by the user. Similarly, the interface 12 may be first fixed to the circuit board 13 and its pin or socket is blocked during injection of the soft plastic material to prevent the ingress of the soft plastic material, so that the pin or socket is exposed outside the formed housing 11 after the soft plastic material is solidified, so as to be engaged with the corresponding interface of the smart platform product 20.

The technical characteristics of the above embodiments can be employed in arbitrary combinations. In an effort to provide a concise description of these embodiments, all possible combinations of all technical characteristics of the examples may not be described; however, these combinations of technical characteristics should be construed as disclosed in the description as long as no contradiction occurs.

The embodiments described above merely represent several embodiments of the present invention, giving specifics and details thereof, but should not be understood as limiting the scope of the present patent of invention thereby. It should be noted that a person of ordinary skill in the art could also make several alterations and improvements without departing from the spirit of the present invention and these would all fall within the scope of protection of the present invention. Therefore, the scope of protection of the present patent of invention shall be in accordance with the appended claims.

## Claims

1. A pluggable wireless module (10) for a smart platform product (20), the pluggable wireless module (10) comprising:
a housing (11) configured to be connected to the smart platform product (20) in a pluggable manner;
an interface (12) located on the housing (11) and configured to be connected to the smart platform product (20) to transmit data when the housing (11) is connected to the smart platform product (20);
a circuit board (13) received in the housing (11);
a communication module located on the circuit board (13); and
a storage module located on the circuit board (13) for receiving and storing data from the smart platform product (20),
wherein when the pluggable wireless module (10) is connected to the smart platform product (20), the communication module is capable of wirelessly communicating with an external smart device (30), such that a user can use the smart device (30) to control the pluggable wireless module (10) to transmit data between the pluggable wireless module (10) and the smart platform product (20) or to set the smart platform product (20).

2. The pluggable wireless module (10) according to claim 1, wherein the communication module comprises a Bluetooth module and/or an NB-IoT module.

3. The pluggable wireless module (10) according to claim 1, wherein the housing (11) comprises a guide (14), and the guide (14) is configured to guide the housing (11) into a slot (23) of the smart platform product (20); preferably, the guide (14) is a slide groove or a slide rail; preferably, the pluggable wireless module (10) further comprises a cover (16), such that when the housing (11) is located in the slot (23) of the smart platform product (20), an outer surface of the cover (16) is flush with an outer surface of the housing (21) of the smart platform product (20).

4. The pluggable wireless module (10) according to any one of claims 1 to 3, wherein the pluggable wireless module (10) further comprises a bevel (18) for positioning when being inserted into the smart platform product (20), or
wherein the pluggable wireless module (10) further comprises a pull ring (15), and the pull ring (15) is configured to be operated by the user to plug and unplug the pluggable wireless module (10), and preferably, the pull ring (15) is configured to be pivotable between a retracted position and an extended position, or
wherein the pluggable wireless module (10) further comprises an indicator light for indicating a connection state of the pluggable wireless module (10), or
wherein when the housing (11) is connected to the smart platform product (20), the interface (12) is engaged with a corresponding interface on a circuit board (22) of the smart platform product (20), or
wherein the pluggable wireless module (10) is powered by the smart platform product (20) when connected to the smart platform product (20), or
wherein the smart device (30) is a smart phone, a smart watch, a desktop computer, a laptop computer or a tablet computer, or
wherein the interface (12) is a serial interface, and preferably, the interface (12) uses a universal asynchronous receiver/transmitter communication protocol to transmit data, or
wherein the pluggable wireless module (10) further comprises one or more of a vibration sensor, a Hall sensor, a temperature sensor, a G-type sensor, and an acceleration sensor.

5. A system comprising a smart platform product (20), the system comprising the pluggable wireless module (10) according to any one of claims 1 to 4.

6. The system according to claim 5, wherein the smart platform product (20) is a battery pack, an adapter, an electric power tool or a sensor module.

7. The system according to claim 5 or 6, wherein the smart platform product (20) comprises a slot (23) for receiving the pluggable wireless module (10); preferably, the slot (23) is at least partially formed by a circuit board (22) of the smart platform product (20).

8. The system according to claim 7, wherein the smart platform product (20) comprises a controller configured to:
identify the identity of the pluggable wireless module (10);
identify a type of a communication module of the pluggable wireless module (10); and
perform Bluetooth logic control or NB-IoT logic control correspondingly in response to identifying that the communication module is a Bluetooth module or an NB-IoT module.

9. The system according to claim 7, wherein the pluggable wireless module (10) comprises a controller configured to: determine whether the pluggable wireless module (10) is inserted into the smart platform product (20); identify a type of the smart platform product (20) in response to determining that the pluggable wireless module (10) is inserted into the smart platform product (20); and operate in different operating modes correspondingly in response to the identified type of the smart platform product (20);
preferably, a step of operating in different operating modes comprises: operating in a first operating mode in response to identifying that the smart platform product (20) is a battery pack or an adapter; and operating in a second operating mode different from the first operating mode in response to identifying that the smart platform product (20) is a sensor module;
preferably, in the first operating mode, the pluggable wireless module (10) works as a gateway, and in the second operating mode, the pluggable wireless module (10) works as a smart tag for a non-electric power tool;
preferably, the pluggable wireless module (10) comprises a Bluetooth module for a Bluetooth radio, wherein in the first operating mode, the Bluetooth radio is configured to share information on the smart platform product (20) into which the pluggable wireless module (10) is inserted and/or information on an electric power tool connected to the smart platform product (20), and in the second operating mode, the Bluetooth radio is configured to share information on the pluggable wireless module (10) and/or data of sensors of the pluggable wireless module (10);
preferably, in the first operating mode, the Bluetooth radio is connectable to the external smart device (30) to establish Bluetooth communication, and in the second operating mode, the Bluetooth radio is not connectable to the external smart device (30);
preferably, in the first operating mode, the sensors of the pluggable wireless module (10) are configured to obtain information on battery usage and ambient conditions, and in the second operating mode, the sensors of the pluggable wireless module (10) are configured to obtain information on the non-electric power tool.

10. The system according to claim 9, wherein the controller is further configured to: reset the pluggable wireless module (10) when the pluggable wireless module (10) is unplugged from the smart platform product (20); preferably, a step of resetting the pluggable wireless module (10) comprises: deleting local data for broadcasting.

11. The system according to claim 9, wherein the controller is further configured to: change a setting of the pluggable wireless module (10), wherein the changed setting is capable of being maintained after powering off the pluggable wireless module (10); preferably, a step of changing a setting of the pluggable wireless module (10) comprises: selectively activating one or more of a plurality of sensors of the pluggable wireless module (10).

12. The system according to claim 9, wherein a communication connection is established between the smart device (30) and the pluggable wireless module (10) through an application program on the external smart device (30), wherein the smart device (30) is capable of accessing one or more of the following pieces of information through the pluggable wireless module (10):
a serial number of the smart platform product (20);
a type of the smart platform product (20);
a running time of the smart platform product (20);
a running time of the pluggable wireless module (10);
available parameters for configuration and current settings;
an ambient temperature;
an activation and deactivation state of the sensors of the pluggable wireless module (10);
the remaining power of a battery of the smart platform product (20); and
the temperature of the battery of the smart platform product (20).

13. The system according to claim 12, wherein the smart device (30) is capable of setting and/or correcting parameters of the pluggable wireless module (10) and/or the smart platform product (20) by means of the pluggable wireless module (10), or
wherein when there is a communication connection between the smart device (30) and the pluggable wireless module (10), the pluggable wireless module (10) remains in an activated state, or
wherein when the smart platform product is a battery pack and the battery pack is connected to a charger or is being charged, the pluggable wireless module is capable of sending or broadcasting one or more of the following pieces of information: a notification that the battery pack is connected to the charger; a notification that the battery pack needs to be cooled before charging; a charged level of the battery pack; a charging type; and a notification that the battery pack is fully charged.

14. A method for manufacturing a pluggable wireless module (10) according to any one of claims 1 to 4, the method comprising:
assembling a circuit board (13) of the pluggable wireless module (10);
supporting the circuit board (13) in a mold;
injecting a soft plastic material into the mold; and
solidifying the soft plastic material to form a housing (11) of the pluggable wireless module (10).

15. The method according to claim 14, wherein the step of injecting the soft plastic material into the mold is carried out at a low pressure and low temperature, or
wherein the soft plastic material is polyamide, or
wherein a pull ring (15) of the pluggable wireless module (10) is fixed on the circuit board (13) and partially extends outside the housing (11), or
wherein an interface (12) of the pluggable wireless module (10) is fixed on the circuit board (13) and partially extends outside the housing (11).
